Europäisches Patentamt

European Patent Office

Office européen des brevets

(19)

(11) Publication number: **0 121 989**
**B1**

(12) **EUROPEAN PATENT SPECIFICATION**

(45) Date of publication of patent specification: **15.07.87**

(51) Int. Cl.⁴: **G 02 B 7/11, G 11 B 7/08**

(21) Application number: **84300777.4**

(22) Date of filing: **07.02.84**

(54) Focussing error detecting apparatus.

(30) Priority: **10.02.83 JP 21187/83**

(43) Date of publication of application:
**17.10.84 Bulletin 84/42**

(45) Publication of the grant of the patent:
**15.07.87 Bulletin 87/29**

(84) Designated Contracting States:
**DE FR GB NL SE**

(56) References cited:
**EP-A-0 088 441**
**DE-A-2 609 877**
**DE-A-2 836 428**
**DE-A-3 001 412**
**US-A-3 454 772**

(73) Proprietor: **SONY CORPORATION**
**7-35 Kitashinagawa 6-Chome Shinagawa-ku**
**Tokyo 141 (JP)**

(72) Inventor: **Ohsato, Kiyoshi c/o Patent Division**
**Sony Corporation 7-35 Kitashinagawa-6**
**Shinagawa-ku Tokyo (JP)**

(74) Representative: **Thomas, Christopher Hugo**
**et al**
**D Young & Co 10 Staple Inn**
**London WC1V 7RD (GB)**

Courier Press, Leamington Spa, England.

## Description

Embodiments of the invention are, for example, suitable for use with optical disc reproducing apparatus and auto-focus cameras (image pick-up devices).

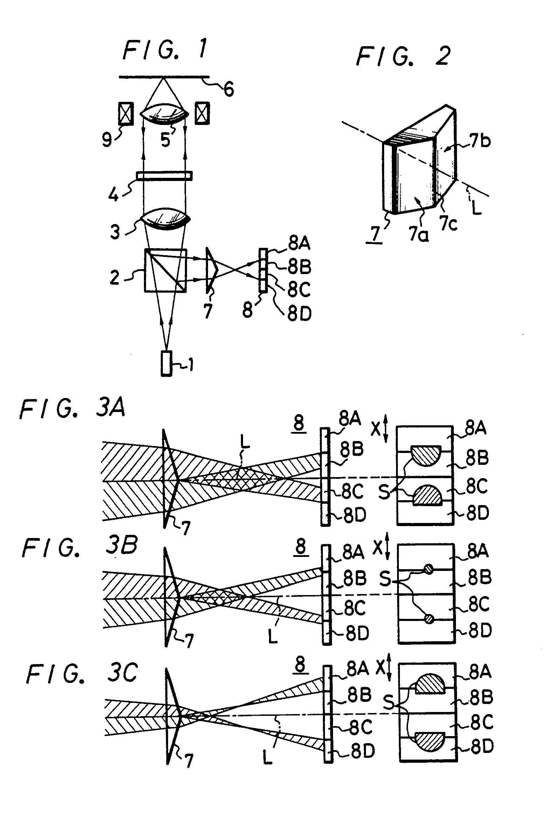

Various focusing error detecting apparatus for use with optical disc reproducing apparatus have been previously proposed. for example, there is disclosed in Japanese unexamined Patent publication No. 56/13532 a device which can simplify an optical system for detecting a focusing error, as shown in Figure 1 of the accompanying drawings. This apparatus employs the combination of a Foucault prism with a photo-detector comprising four photo-detecting elements which are arranged collinearly.

In the apparatus of Figure 1, laser light emitted from a laser light source (for example, a semiconductor laser light source) 1 is passed through a polarizing beam splitter 2, a collimator lens 3, a $\frac{1}{4}$-wave plate 4 and an objective lens 5 in this order to a recording face 6 of a disc. On the recording face 6 of the disc there is recorded as a spiral track, for example, modulated audio and/or video information in the form of pits so as to be reproduced optically. The laser light reflected by the recording face 6 passes sequentially through the objective lens 5, the $\frac{1}{4}$-wave plate 4, the collimator lens 3, the polarizing beam splitter 2 and a prism 7 to a photodetector 8.

The prism 7 includes a refractive face which consists of two rectangular faces 7a and 7b intersecting at an obtuse angle as shown in Figure 2 of the accompanying drawings. The prism 7 is so located that the refractive faces 7a and 7b are positioned at the side from which the light is emitted, and an edge line 7c therebetween is arranged to be perpendicular to an optical axis L of the incident light. The photo-detector 8 comprises, as shown also in Figure 3 of the accompanying drawings, four photo-detecting elements 8A, 8B, 8C and 8D, the photo-detecting faces of which are disposed in the plane perpendicular to the optical axis L, and which are arranged along the X-direction perpendicular to both the optical axis L and the edge line 7c. The photo-detector 8 is placed at the appropriate position relative to the direction of the optical axis L and the X-direction. A difference signal between a sum signal $S_A + S_D$ of photo-detecting signals $S_A$ and $S_D$ from the outer photo-detecting elements 8A and 8D, and a sum signal $S_B + S_C$ of photo-detecting signals $S_B$ and $S_C$ from the inner photo-detecting elements $S_B$ and $S_C$, namely a difference signal $(A_A + S_D)-(S_B + S_C)$ is derived as a focusing error signal.

The objective lens 5 can be moved along the optical axis direction by passing current through a control coil 9. The focusing error signal thus derived is supplied to the control coil 9 as a focusing control signal.

In this previously proposed apparatus, when the recording face 6 of the disc is placed at the appropriate position relative to the objective lens 5, and a so-called just-focus state is established, as shown in Figure 3B of the accompanying drawings, a spot S of the light passing through the prism 7 onto the photo-detector 8 appears as dots of substantially the same size on the separated zones between the elements 8A and 8B, and 8C and 8D, respectively. Accordingly, in this case, the focusing error signal becomes zero and hence the position of the objective lens 5 remains unchanged.

When the recording face 6 of the disc is positioned close to the objective lens 5 and a so-called under-focus state is established, as shown in Figure 3A, the spot S on the photo-detector 8 appears as respective semicircles mainly on the inner elements 8B and 8C. Therefore, in this case, the focusing error signal becomes negative and hence the objective lens 5 is moved in the direction away from the recording face 6.

When the recording face 6 of the disc is spaced from the objective lens 5 and a so-called over-focus state is established, as shown in Figure 3C of the accompanying drawings, the spot S on the photo-detector 8 appears as respective semicircles mainly on the outer elements 8A and 8D so that, in this case, the focusing error signal becomes positive and hence the objective lens 5 is moved in the direction closer to the recording face 6.

As described above, the photo-detector 8 comprising the prism 7 and the four colinear photo-detecting elements 8A to 8D detects the focusing error, or the distance between the recording face 6 of the disc and the objective lens 5. This focusing error signal is supplied to the control coil 9 as the focusing control signal by which the focusing operation is automatically controlled so as always to achieve the just-focus state by making the objective lens 5 remain a constant distance from the recording face 6 of the disc at all times.

This previously proposed apparatus has, however, a defect that, in order to get the spot S on the photo-detector 8 into the respective focusing states as shown in Figures 3A to 3C, the photo-detector 8 has to be placed at the precise position relative to the direction of the optical axis L and the X-direction, which requires extreme precision in adjusting the position of the photo-detector 8. Furthermore, the prism 7 has a light loss at its apical angle. Since the apical angle forms the edge line 7C, the loss of light is significant. Thus, in order to reduce such loss of light, it is necessary to enhance the precision in finishing the apical angle of the prism 7.

These defects are overcome in the focusing error detecting apparatus disclosed in Japanese unexamined Utility Model publication No. 54/84957.

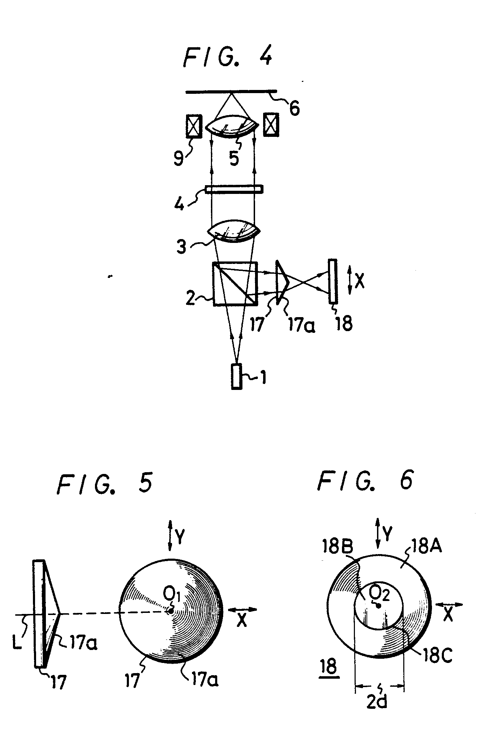

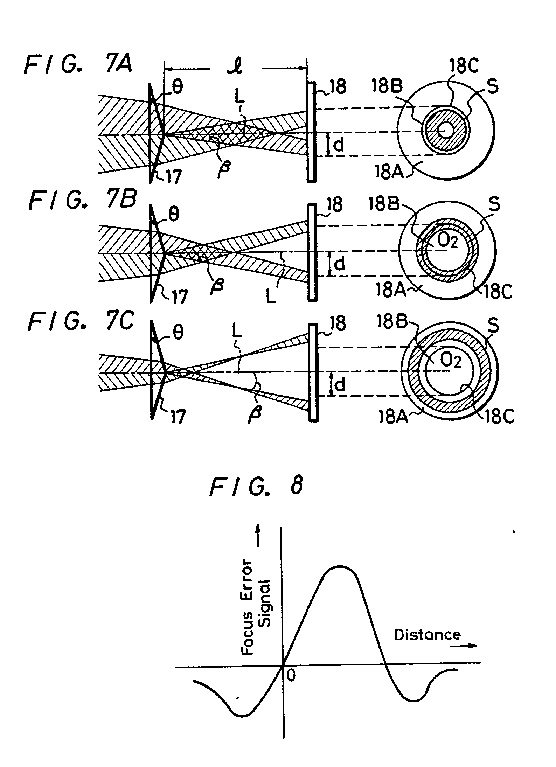

Figure 4 of the accompanying drawings is a schematic diagram of such apparatus which replaces the above prism 7 of Figures 1 to 3 with a lens having a conical refractive face. That is, in this example, on the light path from the polarizing beam splitter 2 to a photo-detector (for example, a PIN photo-diode) 18, there is placed a lens 17 having a conical refractive face 17a, in such a way that the refractive face 17a is located at the side from which the light is emitted. In this case, as shown in Figure 5 of the accompanying drawings, the center $0_1$ of the lens 17 is positioned on the optical axis L. Further, as shown in Figure 6, the photo-detector 18 is formed of annular and circular concentric photo-detecting elements 18A and 18B, and the common centres $0_2$ of which are also positioned on the optical axis L. In this case, as shown in Figure 7 of the accompanying drawings, it is assumed that a base angle of the lens 17 is $\theta$ and the radius of a dead zone (separated zone) 18C between the elements 18A and 18B of the photodetector 18 is d. Then, in order that the light beam which has passed through the lens 17 is very close to the optical axis L may reach the dead zone 18C between the elements 18A and 18B, the distance I between the lens 17 and the photo-detector 18 has to be selected to satisfy:

$$I = d \cot \beta$$

where $\beta$ is an angle as given by:

$$\sin(\beta + \theta) = n \sin \theta$$

and n is the refractive index of the glass forming the lens 17. A difference signal $S_A - S_B$ between photo-detecting signals $S_A$ and $S_B$ from the elements 18A and 18B is derived therefrom as a focusing error signal. This focusing error signal is supplied to the control coil 9 shown in Figure 4 as a focusing control signal.

In this apparatus, when the recording face 6 of the disc is maintained at the appropriate distance relative to the objective lens 5 so as to establish the just-focus state, as shown in Figure 7B of the accompanying drawings, the spot S of the laser light on the photo-detector 18 appears as a ring on the dead zone 18C between the elements 18A and 18B. Accordingly, in this case, the focusing error signal becomes zero and the position of the objective lens 5 remains unchanged.

When the recording face 6 of the disc is positioned close to the objective lens 5 so as to establish the under-focus state, as shown in Figure 7A of the accompanying drawings, the spot S on the photo-detector 18 appears as a ring in the inner element 18B, so that, in this case, the focusing error signal becomes negative and thereby the objective lens 5 is moved away from the recording face 6.

When the recording face 6 of the disc is spaced from the objective lens 5, so as to establish the over-focus state as shown in Figure 7C of the accompanying drawings, the spot S on the photo-detector 18 appears as a ring in the outer element 18A so that, in this case, the focusing error signal becomes positive and thereby the objective lens 5 is moved closer to the recording face 6.

In this way, the photo-detector 18 which comprises the lens 17 having the conical refractive face 17a and the two concentric photo-detecting elements 18A and 18B detects the focusing state or distance between the recording face 6 of the disc and the objective lens 5. The focusing error signal is supplied to the control coil 9 as the focusing control signal by which the focusing control operation is automatically carried out so as always to achieve the just-focus state, or to maintain the objective lens 5 at a constant distance from the recording face 6 of the disc at all times.

With the previously proposed apparatus shown in Figure 4, since the lens 17 having the conical refractive face 17a is combined with the photo-detector 18 formed of the two concentric photo-detecting elements 18A and 18B, the alignment of the photo-detector 18 is easy.

The apparatus of Figure 1 uses the prism 7 which has the refractive face formed of the two rectangular faces 7a and 7b and the photodetector 8 formed of four photo-detecting elements 8A to 8D arranged collinearly. Therefore, in the respective focusing state shown in Figure 3A or 3C, parts of the spot S appear as the respective semicircles on the inner elements 8B and 8C or the outer elements 8A and 8D near the separation zone (dead zone) between the elements 8A and 8B, or the dead zone between the elements 8C and 8D, receives not only the weak light which has passed through the portion close to the centre of the prism 7, but also the more intense light which has passed through the portion of the prism 7 distant from the centre thereof. For this reason, when the photo-detector 8 is displaced in position in the direction of the optical axis and the X-direction in Figure 3A or 3C, if the spot S lies across the outer elements 8A and 8D or the inner elements 8B and 8C, the focusing error signal fluctuates substantially as compared with that in the correctly positioned state, so that erroneous detection may occur. Thus, the position of the photo-detector 8 in the direction of the optical axis and in the X-direction must be adjusted very precisely.

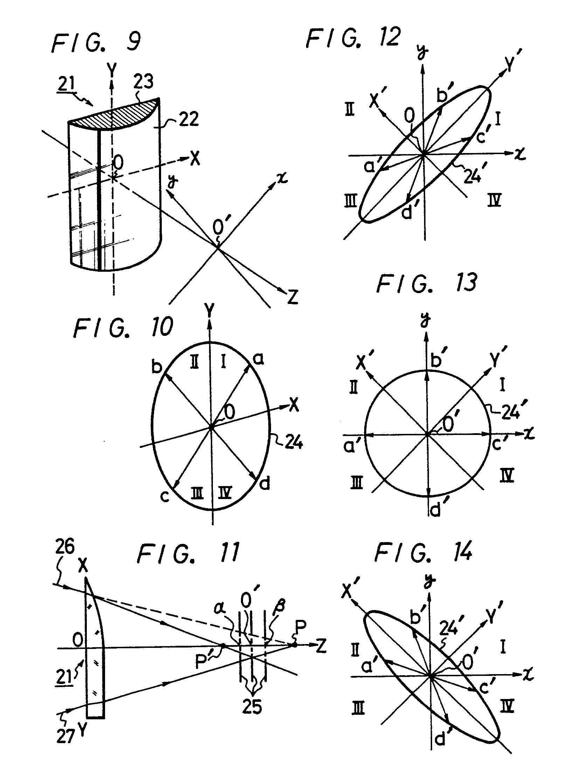

Meanwhile, the apparatus in Figure 4 employs the lens 17 having the conical refractive face 17a which is combined with the photo-detector 18 formed of the two concentric photo-detecting elements 18A and 18B. Consequently, in Figure 7A or 7C, a part of the spot S to appear as the respective rings on the inner element 18B or the outer element 18A near the dead zone 18c between the elements 18A and 18B is formed of the weak light which has passed through the portion close to the centre of the lens 17, and hence the amount of light is reduced, while a part of the spot S away from the dead zone 18c is formed of only the more intense light which has passed through the portion distant from the centre of the lens 17, and accordingly the amount of light is increased. In other words, the amount of light of the spot S, in the under-focus state of Figure 7A, decreases more at the outside closer to the dead zone 18c, while it increases more at the inside. In the over-focus state of Figure 7C, the amount of light decreases more at its inside closer to the dead zone 18c, while it increases at its outside. Reference is now made to Figure 8. When the position of the photo-detector 18 is displaced somewhat in the direction of the optical axis and the X and Y directions in Figure 7A or 7C, even if the spot S lies across the outer element 18A or the inner element 18B a little, the focusing error signal does not change much as compared with the case where the position of the photo-detector 18 is accurate, so that erroneous detection will not occur. Thus, it is not necessary that the positions of the photo-detector 18 in the direction of the optical axis and the X and Y directions are adjusted so precisely.

With the apparatus of Figure 4, since the amount of light of the spot S decreases more at its side closer to the dead zone and increases more at its side away from the dead zone, and as the more the focusing state is displaced from the just-focus state, the more the spot S is widened in the direction away from the dead zone, there is a substantial loss of sensitivity.

Although the lens 17 causes loss of light at its apical portion, its apical portion is not formed of the edge line but merely as a point, so that the loss of light is small. Thus, it is not necessary to improve the precision in finishing the apical angle for the purpose of reducing the loss of light.

The apparatus of Figure 4 has, however, the following defect. Since the focusing error signal is formed in dependence on the difference between the amount of light of the spot S on the photo-detecting face of the photo-detector 18 at its central and external peripheral portions, this focusing error signal contains therein a leaked high frequency signal due to diffraction of the light on the pits formed on the disc. Moreover, because a light-modulating characteristic of a pit for a spatial frequency is different between the central and external peripheral portions of the spot S, the focusing error signal obtained from the apparatus in Figure 4 is not very precise.

Also, in the apparatus of Figure 4, since the change in the radius of the spot S on the photo-detector 18 is detected as a change in area, the characteristic of a defocusing amount vs. the focusing error signal is in inverse proportion to the square of the radius of the spot S in the vicinity of the just-focus state and is therefore poor in linearity.

The apparatus of Figure 1 has the same defects as those of the apparatus of Figure 4 described above.

Other focusing error detecting apparatus disclosed in GB—A—1 493 963 (US—A—4 023 033) has been proposed in which the photo-detecting face of a photo-detector is circular, and the photo-detector is divided into four equal parts so as to form photo-detecting elements in four quadrants. A semi-columnar lens is placed in front of the photo-detector, and the difference between the sum of photo-detecting signals from the photo-detecting elements in the first and third quadrants and the sum of photo-detecting signals from the photo-detecting elements in the second and fourth quadrants is obtained to generate the focusing error signal.

This previously proposed focusing error detecting apparatus will now be further described with reference to Figure 9 of the accompanying drawings, which schematically illustrates a semi-columnar lens 21 which comprises a semi-columnar face 22 and a rectangular flat face 23. On the flat face 23, its centre is taken as the origin O and an orthogonal coordinate system is provided which consists of an X-axis parallel to a generatrix of the semi-columnar face 22, a Y-axis perpendicular thereto and a Z-axis perpendicular to the flat plane 23. On the Z-axis, a point spaced a predetermined distance from the origin O at the side of the semi-columnar face 22 of the lens 21 is taken as an origin O' and an orthogonal coordinate system is provided within the plane perpendicular to the Z-axis which comprises an x-axis for forming an angle of 45° against each positive side of the X and Y-axes, and a y-axis perpendicular to the x-axis. The circular detecting face of the photo-detector coincides with the x and y-plane, and the detecting face is divided by the x and y axes into four equal quadrants.

The lens 21 receives on its flat face 23 a focusing beam the optical axis of which is coincident with the Z-axis and in which a spot 24 on the flat face 23 becomes circular as shown in Figure 10 of the accompanying drawings, which is a perspective view. Axes $a$ to $d$ on the radius of the circular spot 24, each axis forming the angle of 45° relative to the X and Y-axes are temporarily provided at the first to fourth quadrants I to IV.

The loci formed by light beams 26 and 27 in XOZ and YOZ cross-sections of the lens 21 when the focusing beam is incident on the lens 21 on its flat face 23 will be described with reference to Figure 11 of the accompanying drawings. The light beam 27 incident on the YOZ cross-section of the lens 21 advances parallel to the incident light because the YOZ cross-section is uniform in its thickness and passes through a point P on the Z-axis. The light beam 26 incident on the XOZ cross-section of the lens 21 is refracted towards the Z-axis side because the XOZ cross-section forms a convex lens and passes through a point P' which is before the point P on the Z-axis.

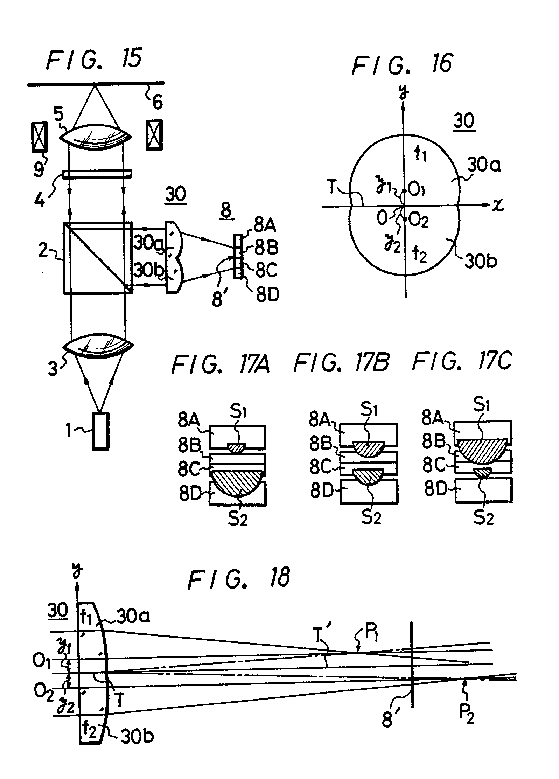

In Figure 11, it is assumed that when a detecting face 25 of the photo-detector is positioned at the middle point O' (Figure 9) between the points P and P' and a spot 24' of the irradiated beam on the detecting face 25 becomes circular as shown in Figure 13 of the accompanying drawings, the focusing light beam from the objective lens 5 is just focused on the recording face 6 of the optical disc. Thus, the fact that the focusing light beam from the objective lens 5 is focused in front of or behind the optical disc is equivalent to the fact that the position of the detecting face 25 of the photo-detector is displaced to the point $a$ in front of the point O' or behind the point O', which allows the spot 24' on the detecting face 25 of the photo-detector to become an ellipse as shown in Figure 12 or 14 of the accompanying drawings, respectively. That is, the elliptical spot 24' in Figure 12 has a long diameter angled at 45° relative in the x-axis in the first and third quadrants I and III, while the elliptical spot 24' in Figure 14 has a long diameter angled at 45° relative to the x-axis in the second and fourth quadrants II and IV. Throughout Figures 12 and 14, the axes a' to d' corresponds to the axes a to d in Figure 10, respectively.

With this arrangement, if the detecting face 25 of the photo-detector is larger that the spot 24', from the photo-detecting elements in the four quadrants I to IV, by the difference between the sum of the photo-detecting signals from the photo-detecting elements in the first and third quadrants I and III, and that of the photo-detecting signals from the photo-detecting elements in the second and fourth quadrants II and IV, the focusing state of the objective lens relative to the optical disc is detected. Thus, if the objective lens 5 is moved along the optical axis thereof so as to reduce such difference to zero, the focusing servo can be performed.

However, in the focusing error signal detecting apparatus comprising the semi-columnar lens 21 combined with the photo-detector which is divided into four equal parts, when the position of the spot 24' on the photo-detecting face 25 of the photo-detector is displaced from the states shown in Figures 12 to 14 in the X' or Y'-axis direction, the precision of the focusing error signal decreases in dependence on the amount of the displacement.

According to the present invention there is provided a focusing error detecting apparatus comprising:

a compound lens; and

a photo-detector disposed behind said compound lens;

characterised in that:

said compound lens comprises a pair of spherical lens regions divided by a boundary plane including the optical axis of light incident on said compound lens, said pair of lens regions having back-focal lengths which are different from each other, and optical axes of said pair of lens regions being spaced apart from each other;

said photo-detector is so placed that the photo-detecting face thereof is positioned at a middle position on the optical axis of said incident light between the focal points at which emitted light from said pair of lens regions is focused when the incident light on said compound lens is in the focused state;

said photo-detector comprises first and second photo-detecting elements for receiving the light which has passed through a first lens region in said pair of lens regions at outer and inner regions relative to said boundary plane, and third and fourth photo-detecting elements for receiving the light which has passed through a second lens region in said pair of lens regions at outer and inner regions relative to said boundary plane; and

wherein based upon the difference between the sum of the first and fourth photo-detecting signals from said first and fourth photo-detecting elements and the sum of the second and third photo-detecting signals from said second and third photo-detecting elements, the focusing error signal is produced.

The invention will now be described by way of example with reference to the accompanying drawings, throughout which like parts are referred to by like references, and in which:

Figure 1 is a schematic view of a previously proposed focusing error detecting apparatus;

Figure 2 is a perspective view of a prism used in the apparatus of Figure 1;

Figures 3A to 3C are schematic views for explaining the operation of the apparatus of Figure 1 in respective focusing states;

Figure 4 is a schematic view of another previously proposed focusing error detecting apparatus;

Figure 5 shows side and front views of a lens of the apparatus of Figure 4;

Figure 6 is a schematic view of a photo-detector of the apparatus of Figure 4;

Figures 7A to 7C are schematic views for explaining the operation of the apparatus of Figure 4 in respective focusing states;

Figure 8 is a graph showing a characteristic curve used to explain the apparatus of Figure 4;

Figure 9 is a perspective view illustrating a semi-columnar lens used in a further previously proposed focusing error detecting apparatus;

Figure 10 is a perspective view showing a beam spot in the apparatus of Figure 9;

Figure 11 is a schematic view illustrating loci of light beams which are incident on the semi-columnar lens of Figure 9;

Figures 12 to 14 are schematic views of a beam spot in the apparatus of Figure 9;

Figure 15 is a schematic view illustrating an embodiment of focusing error detecting apparatus according to the present invention;

Figure 16 is a plan view of à compound lens used in the apparatus of Figure 15;

Figures 17A to 17C are respectively plan views of a photo-detector used in the apparatus of Figure 15;

Figure 18 is a schematic view illustrating a positional relation between the compound lens and the photo-detector used in the apparatus of Figure 15;

Figures 19 and 20 are respectively graphs showing characteristic curves for explaining the operation of the apparatus of Figure 15;

Figure 21 is a schematic view illustrating another embodiment of focusing error detecting apparatus according to the present invention;

Figure 22 is a plan view of a compound lens used in the apparatus of Figure 21;

Figures 23A to 23C are respectively plan views of a photo-detector used in the apparatus of Figure 21;

Figure 24 is a schematic view illustrating a positional relation between the compound lens and the photo-detector used in the apparatus of Figure 21;

Figures 25 to 28 are respectively cross-sectional views illustrating other examples of compound lens used in embodiments of focusing error detecting apparatus according to the present invention;

Figures 29 to 31 are respectively plan views illustrating other examples of the compound lens used in the embodiments of focusing error detecting apparatus according to the present invention; and

Figures 32 and 33 are respectively plan views illustrating other examples of photo-detector used in embodiments of focusing error detecting apparatus according to the present invention.

Figure 15 schematically illustrates an embodiment of focusing error detecting apparatus for use in an optical disc reproducing apparatus.

In Figure 15, the laser light from a laser light source (for example, a semiconductor laser light source) 1 passes sequentially through a collimator lens 3, a polarizing beam splitter 2, a $\frac{1}{4}$-wave plate 4 and an objective lens 5 before falling on a recording face 6 of the disc. On the recording face 6 of the disc, there is formed a spiral track on which, for example, modulated audio and/or video information is recorded by forming pits which can be reproduced optically. The laser light reflected from the recording face 6 passes sequentially through the objective lens 5, the $\frac{1}{4}$-wave plate 4, the polarizing beam splitter 2 and a compound lens 30 to a photo-detector 8.

The compound lens 30 consists of a pair of, for example, convex lens regions 30a and 30b divided by a boundary plane T which includes the optical axis O of the incident light on the compound lens 30 as shown in Figures 16 and 18. The pair of lens regions 30a and 30b have back-focal lengths $f_1$ and $f_2$ which are different from each other. Optical axes $O_1$ and $O_2$ of the pair of lens regions 30a and 30b are spaced apart from each other. In the case of Figure 16, the compound lens 30 is placed on the x,y plane perpendicular to the optical axis O of the incident light, and the boundary plane T is made coincident with the x-axis. The optical axes $O_1$ and $O_2$ of the lens regions 30a and 30b are positioned on the y-axis so as to be separated from the boundary plane T by distances $y_1$ and $y_2$, respectively. The compound lens 30 may be formed by making the pair of lens regions 30a and 30b individually of glass or plastics and then bonding them together, or the compound lens 30 may be integrally moulded from plastics material.

As shown in Figure 18, the photo-detector 8 is positioned such that when the incident light on the compound lens 30 to be focused is parallel light, the photo-detecting face 8' is positioned at the middle point between focal points $P_1$ and $P_2$ (which are positioned on the optical axes $O_1$ and $O_2$ on respective sides of the plane T' extending from the boundary plane T) on the optical axis O of the incident light from the pair of lens regions 30a and 30b. The photo-detector 8 is formed, as shown in Figure 17, of first and second photo-detecting elements 8B and 8A for receiving the emitted light which has passed though the outer and inner portions of the first lens region, 30a relative to the boundary plane T in the pair of lens regions 30a and 30b, and third and fourth photo-detecting elements 8D and 8C for receiving the emitted light which has passed through the outer and inner portions of the second lens region 30b relative to the boundary plane T in the pair of lens regions 30a and 30b. The first to fourth photo-detecting elements 8A to 8D are each rectangular and are arranged collinearly in that order, for example, in the tracking direction of the recording face 6 of the disc. In this case, the photo-detecting elements 8B and 8C can be formed integrally.

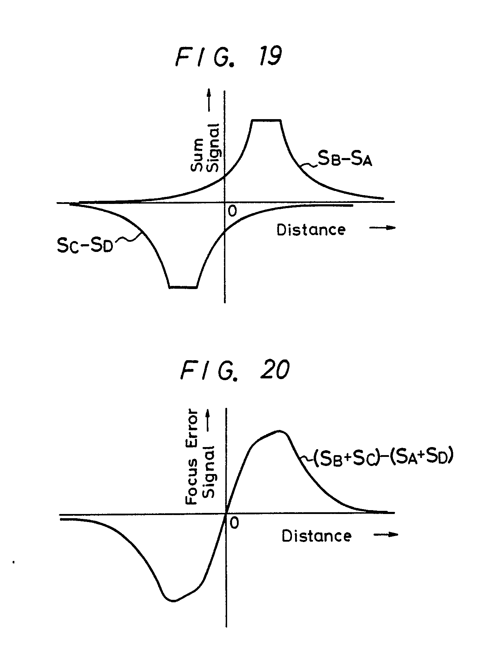

A difference between a sum $S_B + S_C$ of first and fourth photo-detecting signals $S_B$ and $S_C$ from the first and fourth photo-detecting elements 8B and 8C, and a sum $S_A + S_D$ of second and third photo-detecting signals $S_A$ and $S_D$ from the second and third photo-detecting elements 8A and 8D, namely $(S_B + S_C)-(S_A + S_D)$ is produced as a focusing error signal (Figure 20). This focusing error signal is supplied to a control coil 9 as a focusing control signal.

The operation of the embodiment of focusing error detecting apparatus shown in Figure 15 will now be described with reference to Figure 17. When the recording face 6 of the disc maintains a proper position relative to the objective lens 5 so as to establish the just-focus state, the parallel light is incident on the compound lens 30 so that, as shown in Figure 17B, spots $S_1$ and $S_2$ on the photo-detector 8 appear as semicircles of the same size and disposed in the same direction on the photo-detecting elements 8A and 8B, and 8C and 8D, respectively. Accordingly, in this case, the focusing error signal becomes zero and the objective lens 5 remains at the original position.

When the recording face 6 of the disc is positioned close to the objective lens 5 so as to establish the under-focus state, the incident light on the compound lens 30 is displaced somewhat from parallel light so that, as shown in Figure 17A, the spots $S_1$ and $S_2$ on the photo-detector 8 appear as a small semicircle on the elements 8A and 8B and a large semicircle on the elements 8C and 8D. Accordingly, in this case, the focusing error signal becomes negative and hence the objective lens 5 is moved away from the recording face.

When the recording face 6 of the disc is distant from the objective lens 5 so as to establish the over-focus state, the incident light on the compound lens 30 becomes somewhat different from the parallel light in the opposite direction so that, as shown in Figure 17C, the spots $S_1$ and $S_2$ on the photo-detector 8 appear as a large semicircle on the elements 8A and 8B and a small semicircle on the elements 8C and 8D. Accordingly, in this case, the focusing error signal becomes positive and the objective lens 5 is moved closer to the recording face 6.

As described above, the photo-detector 8 which comprises the compound lens 30 and the four collinear photo-detecting elements 8A to 8D detects the focusi'g error, namely the distance between the recording face 6 of the disc and the objective lens 5. This focusing error signal is supplied to the control coil 9 as the focusing control signal by which the objective lens 5 is automatically controlled in position so as always to establish the just-focus state or to maintain the objective lens 5 at a constant distance relative to the recording face 6 of the disc at all times.

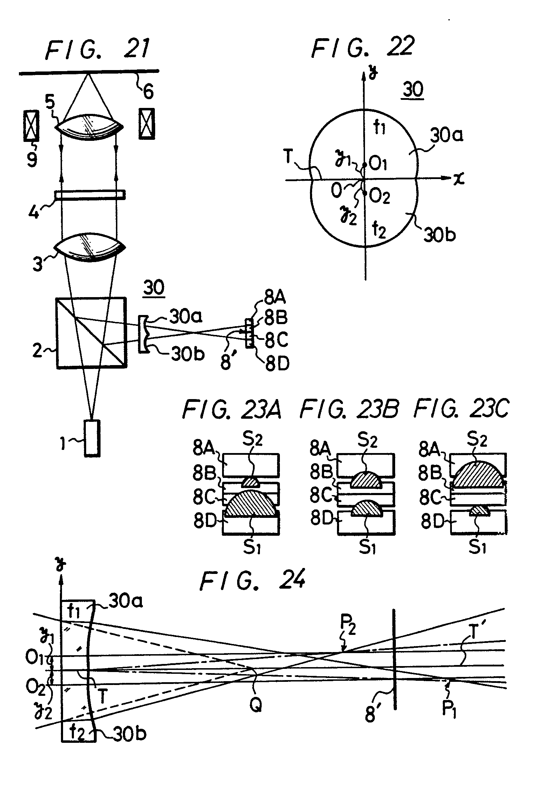

Another embodiment of the invention will now be described. Figure 21 schematically illustrates the case where the embodiment of focusing error detecting apparatus is used in an optical disc reproducing apparatus. Here, the compound lens 30 consists of a pair of concave lens region 30a and 30b.

In the case of Figure 21, the laser light from the laser light source (for example, a semiconductor laser light source) 1 passes sequentially through the polarizing beam splitter 2, the collimator lens 3, the $\frac{1}{4}$-wave plate 4 and the objective lens 5 to the recording face 6 of the disc. The recording face 6 of the disc has a spiral recording track on which, for example, modulated audio and/or video information is recorded by forming pits so as to be reproduced therefrom optically. The laser light reflected from the recording face 6 passes through the objective lens 5, the $\frac{1}{4}$-wave plate 4, the collimator lens 3, the polarizing beam splitter 2 and the compound lens 30 before falling on the photo-detector 8.

The compound lens 30 consists of a pair of concave lens regions 30a and 30b which are divided by the boundary plane T including the optical axis O of the light incident on the compound lens 30 as shown in Figures 22 and 24. The pair of lens regions 30a and 30b have back-focal lengths $f_1$ and $f_2$ which are different from each other. Optical axes $O_1$ and $O_2$ of the pair of lens regions 30a and 30b are spaced apart from each other. As shown in Figure 22, the compound lens 30 is placed on the x,y plane perpendicular to the optical axis O of the incident light and the boundary plane T thereof is made coincident with the x-axis. The optical axes $O_1$ and $O_2$ of the lens regions 30a and 30b are positioned on the y-axis on respective sides of the boundary plane T at distances of $y_1$ and $y_2$, respectively.

As shown in Figure 24, the photo-detector 8 is positioned such that, when the light incident on the compound lens 30 in the focusing state or when the focusing light towards a virtual object point Q, the photo-detecting face 8' of the photo-detector 8 is positioned at the middle point between focal points $P_1$ and $P_2$ (which are positioned on the optical axes $O_1$ and $O_2$ on respective sides of the plane T' extending from the boundary plane T) on the optical axis O of the emitted light from the pair of lens regions 30a and 30b: The photo-detector 8 consists, as shown in Figure 23, of first and second photo-detecting elements 8C and 8D for receiving the emitted light which has passed through the outer and inner portions of the first lens region 30a relative to the boundary plane T, and third and fourth photo-detecting elements 8A and 8B for receiving the emitted light which has passed through the outer and inner portions of the second lens regions 30b relative to the boundary plane T. The first to fourth photo-detecting elements 8A to 8D are each rectangular and are arranged collinearly in that order, for example, in the tracking direction of the recording face 6 of the disc. In this case, the photo-detecting elements 8B and 8C can be formed integrally.

A difference between a sum $S_C + S_B$ of the first and fourth photo-detecting signals $S_C$ and $S_B$ from the first and fourth photo-detecting elements 8C and 8B, and a sum $S_D + S_A$ of the second and third photo-detecting elements 8D and 8A, namely $(S_C + S_B) - (S_D + S_A)$ is produced as a focusing error signal. This focusing error signal is supplied to the control coil 9 as a focusing control signal.

The operation of the embodiment of Figure 21 will now be described with reference to Figure 23. When the recording face 6 of the disc maintains a proper position relative to the objective lens 5 so as to establish the just-focus state, the focusing light which will pass to the virtual object point Q is incident on the compound lens 30 so that, as shown in Figure 23B, the spots $S_1$ and $S_2$ on the photo-detector 8 appear as semicircles of the same size on the photo-detecting elements 8C and 8D, and 8A and 8B, respectively. Accordingly, in this case, the focusing error signal becomes zero and the objective lens 5 remains at the original position.

When the recording face 6 of the disc is positioned close to the objective lens 5 so as to establish the under-focus state, the incident light on the compound lens 30 is displaced somewhat from that in the just-focus state so that, as shown in Figure 23A, the spots $S_1$ and $S_2$ on the photo-detector 8 appear as a large semicircle on the elements 8C and 8D and a small semicircle on the elements 8A and 8B. Accordingly, in this case, the focusing error signal becomes negative and hence the objective lens 5 is moved away from the recording face 6.

When the recording face 6 of the disc is distant from the objective lens 5 so as to establish the over-focus state, the incident light on the compound lens 30 is displaced somewhat from that in the just-focus state in the opposite direction so that, as shown in Figure 23C, the spots $S_1$ and $S_2$ on the photo-detector 8 appear as a small semicircle on the elements 8C and 8D and a large semicircle on the elements 8A and 8B in the same direction, respectively. Accordingly, in this case, the focusing error signal becomes positive and the objective lens 5 is moved closer to the recording face 6.

As described above, the compound lens 30 and the photo-detector 8 comprising four collinear photo-detecting elements 8A to 8D are used to detect the focusing error, namely, the distance between the recording face 6 of the disc and the objective lens 5. This focusing error signal is supplied to the control coil 9 as the focusing control signal by which the objective lens 5 is

**0 121 989**

automatically controlled in position so as always to establish the just-focus state, that is, to maintain the objective lens 5 at a constant distance relative to the recording face 6 of the disc at all times.

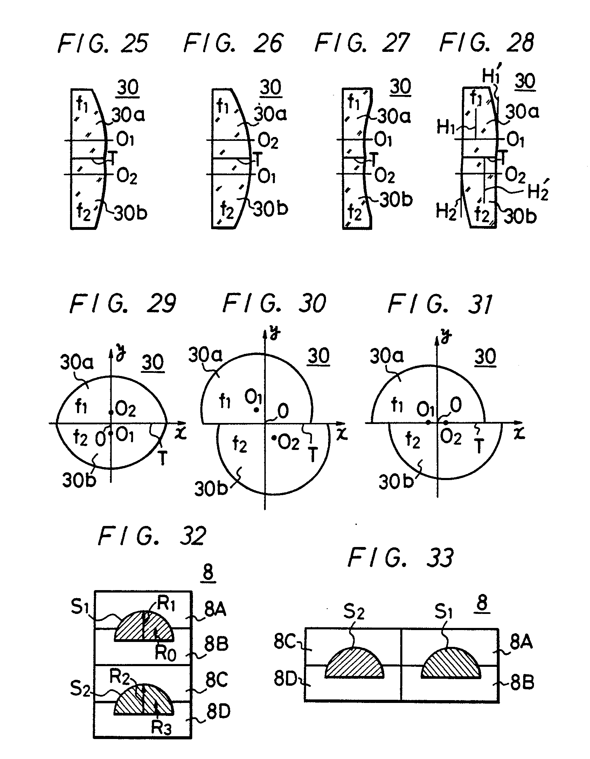

Examples of the compound lens 30 will be described with reference to Figures 25 to 31. The compound lens 30 shown in Figure 25 comprises the pair of lens regions 30a and 30b which are each formed of a convex lens. The compound lens 30 of Figure 27 comprises the pair of lens regions 30a and 30b each formed of a concave lens. In both cases of the compound lenses 30, the optical axes $O_1$ and $O_2$ of the pair of lens regions 30a and 30b are within their lens regions 30a and 30b. The compound lenses 30 of Figures 26 and 29 are cases in which the optical axes $O_1$ and $O_2$ of the pair of lens regions 30a and 30b exist in the other lens regions 30b and 30a. Although not shown, a case is possible in which both the optical axes $O_1$ and $O_2$ of the pair of lens regions 30a and 30b exist in the same one of the lens regions 30a and 30b. As shown in Figure 28, it is also possible for the pair of lens regions 30a and 30b to employ lenses of the same power, and their pricipal faces $H_1$ and $H_1'$, and $H_2$ and $H_2'$ are reversed in the direction. When the compound lens 30 is placed on the x,y plane so as to locate its boundary plane T on the x-axis, as shown in Figures 16, 22 and 29, the optical axis $O_1$ and $O_2$ may be positioned on respective sides of the boundary plane T on the y-axis, so that the optical axes $O_1$ and $O_2$ are positioned on respective sides of the boundary plane T, but neither on the x and y-axes as shown in Figure 30, and the optical axes $O_1$ and $O_2$ are positioned on the x-axis, namely, the boundary plane T as shown in Figure 31.

It is possible that, in response to a positional relation between the respective optical axes $O_1$ and $O_2$ of the compound lens 30, the arrangement of the respective photo-detecting elements 8A to 8D in the photo-detector 8 is selected. Figure 32 shows the arrangement of the photo-detecting elements 8A to 8D of the photo-detector 8 (substantially the same as that in Figure 17) when the optical axes $O_1$ and $O_2$ of the pair of lens regions 30a and 30b forming the compound lens 30 are positioned on the y-axis at respective sides of the boundary plane T as shown in Figure 16. This arrangement shown in Figure 32 can also be used when the compound lens 30 is constructed such that the optical axes $O_1$ and $O_2$ thereof are slightly displaced from the y-axis as shown in Figure 30. When the optical axes $O_1$ and $O_2$ of the pair of lens regions 30a and 30b forming the compound lens 30 are placed on the x-axis, namely, the boundary plane T, the photo-detecting elements 8A to 8D in the photo-detector 8 are arranged in two rows of two as shown in Figure 33.

As shown in Figure 32, the radii of the semicircular spots $S_1$ and $S_2'$ on the photo-detecting elements 8A and 8B, and 8C and 8D of the photo-detector 8 are represented as $R_1$ and $R_2$, and the lengths of the spots $S_1$ and $S_2$ on the photo-detecting elements 8B and 8D are represented as

$R_0$ and $R_3$ (where the widths of the dead zones in the photo-detecting elements 8A to 8D are neglected). If the relation between these lengths $R_0$ to $R_3$ is selected so as to satisfy:

$$\frac{R_0}{R_1} = \frac{R_3}{R_2}$$

even when $R_1 = R_2$ is not satisfied, the focusing error signal $(S_A + S_D) \sim (S_B + S_C)$ resulting from calculating the photo-detecting signals $S_A$ to $S_D$ can be reduced to zero in the just-focus state. When $R_1 = R_2$ is satisfied, it is sufficient that the amount of light incident on the photo-detecting elements 8A and 8C is equal to that incident on the photo-detecting elements 8B and 8D. Therefore, regardless of the length $R_0(=R_3)$, the focusing error signal can be reduced to zero in the just-focus state.

The above-described embodiments of the focusing error detecting apparatus according to the present invention can offer the following advantages. The focusing error signal is obtained by calculating the sum $(S_A \sim S_C) + (S_D \sim S_B) = (S_A + S_D) \sim (S_B + S_C)$ between a difference $S_A \sim S_C$ (or $S_D \sim S_B$) of the photo-detecting signals from the photo-detecting elements which receive the emitted light which has passed through the lens regions 30a and 30b in the compound lens 30 outside the boundary plane T, and a difference $S_D \sim S_B$ (or $S_A \sim S_C$) or the photo-detecting signals from the photo-detecting elements which receive the emitted light which has passed through the lens regions 30a and 30b inside the boundary plane T. Consequently, since the resultant focusing error signal can avoid the leakage of the high frequency signal due to the diffraction by pits on the disc, and the different characteristics of the light-modulation for the spatial frequency of the pits at the central and outer peripheral portions of the spot, the focusing error signal has the precision improved.

Moreover, since the focusing error signal is obtained by calculating the sum $(S_A + S_D) \sim (S_B + S_C)$ of a difference $S_A - S_B$ (or $S_B - S_A$) between the photo-detecting signals from the photo-detecting elements which respectively receive the emitted light passing through outside and inside the boundary plane T in one lens region 30a of the compound lens 30, and a difference $S_D - S_C$ (or $S_C - S_D$) between the photo-detecting signals from the photo-detecting elements which respectively receive the emitted light passing through inside and outside the boundary plane T in the other lens region 30b of the compound lens 30, due to the symmetry of the difference signals $S_B - S_A$ and $S_C - S_D$ (Figure 19), a focusing error signal of excellent linearity as shown in Figure 20 can be produced.

Moreover, as shown in Figure 32, where the radii of the semicircular spots $S_1$ and $S_2$ on the photo-detecting elements 8A and 8B, and 8C and 8D of the photo-detector 8 are $R_1$ and $R_2$, and the lengths of the spots $S_1$ and $S_2$ on the photo-detecting elements 8B and 8D are $R_0$ and $R_3$ (where the widths of the dead zones in the photo-detecting elements 8A to 8D are neglected), if $R_1 = R_2$ is satisfied, it is sufficient that the amount of light incident on the photo-detecting elements 8A and 8C is equal to that incident on the photo-detecting elements 8B and 8D. Therefore, regardless of the length $R_0$ (= $R_3$), the focusing error signal can be reduced to zero in the just-focus state. Thus, even if the spots $S_1$ and $S_2$ on the photo-detector 8 are respectively displaced in the direction along with the photo-detecting elements 8A, 8B, 8C and 8D are arranged, the precision of the focusing error signal will not be reduced.

## Claims

1. A focusing error detecting apparatus comprising:
a compound lens (30); and
a photo-detector (8) disposed behind said compound lens (30);
characterised in that:
said compound lens (30) comprises a pair of spherical lens regions (30a, 30b) divided by a boundary plane (T) including the optical axis (O) of light incident on said compound lens (30), said pair of lens regions (30a, 30b) having back-focal lengths which are different from each other, and optical axes ($O_1$, $O_2$) of said pair of lens regions (30a, 30b) being spaced apart from each other;
said photo-detector (8) is so placed that the photo-detecting face thereof is positioned at a middle position on the optical axis (O) of said incident light between the focal points at which emitted light from said pair of lens regions (30a, 30b) is focused when the incident light on said compound lens (30) is in the focused state;
said photo-detector (8) comprises first and second photo-detecting elements (8A, 8B) for receiving the light which has passed through a first lens region (30a) in said pair of lens regions (30a, 30b) at outer and inner regions relative to said boundary plane (T), and third and fourth photo-detecting elements (8C, 8D) for receiving the light which has passed through a second lens region (30b) in said pair of lens regions (30a, 30b) at outer and inner regions relative to said boundary plane (T); and
wherein based upon the difference between the sum of the first and fourth photo-detecting signals from said first and fourth photo-detecting elements (8A, 8D) and the sum of the second and third photo-detecting signals from said second and third photo-detecting elements (8B, 8C) the focusing error signal is produced.

2. Apparatus according to claim 1 wherein said compound lens (30) is made of plastics material.

3. Apparatus according to claim 1 or claim 2 wherein said second and third photo-detecting elements (8B, 8C) are formed integrally.

## Patentansprüche

1. Vorrichtung zum Ermitteln des Fokussierfehlers, mit
einer Verbundlinse (30) und
einem hinter der Verbundlinse (30) angeordneten Photo-detektor (8),
dadurch gekennzeichnet,
daß die Verbundlinse (30) ein Paar sphärischer Linsenbereiche (30a, 30b) aufweist, die durch eine Grenzebene (T) geteilt sind, die die optische Achse (O) des auf die Verbundlinse (30) auftreffenden Lichts enthält, wobei die beiden Linsenbereiche (30a, 30b) sich unterscheidende bildseitige Brennweiten haben und die optischen Achsen ($O_1$, $O_2$) der beiden Linsenbereiche (30a, 30b) voneinander beabstandet sind,
daß der Photodetektor (8) derart angeordnet ist, daß dessen lichtempfindliche Seite in einer Mittelposition auf der optischen Achse (O) des einfallenden Lichts zwischen den Brennpunkten liegt, in denen von dem Paar der Linsenbereiche (30a, 30b) eimittiertes Licht fokussiert ist, wenn sich das auf die Verbundlinse (30) auftreffende Licht im fokussierten Zustand befindet, daß der Photodetektor (8) erste und zweite Photodetektor-elemente (8A, 8B) für den Empfang von Licht, das durch einen ersten Linsenbereich (30a) des Paars von Linsenbereichen (30a, 30b) getreten ist, in äußeren und inneren Bereichen bezüglich der Grenzebene (T) und dritte und vierte Photodetektorelemente (8C, 8D) für den Empfang von Licht aufweist, das durch einen zweiten Linsenbereich (30b) des Paars von Linsenbereichen (30a, 30b) getreten ist, in äußeren und inneren Bereichen bezüglich der Grenzbene (T) und
daß auf der Grundlage der Differenz zwischen der Summe von erstem und viertem Photoerfassungssignal von dem ersten bzw. dem vierten Photodetektorelement (8A, 8D) und der Summe von zweitem und dritten Photofassungssignal von dem zweiten bzw. dem dritten Photodetektorelement (8B, 8C) das Fokussierfehlersignal erzeugt wird.

2. Vorrichtung nach Anspruch 1, bei der die Verbundlinse (30) aus Kunststoffmaterial hergestellt ist.

3. Vorrichtung nach Anspruch 1 oder 2, bei der zweites und drittes Photodetektorelement (8B, 8C) einstückig ausgebildet sind.

## Revendications

1. Appareil de détection d'erreur de mise au point, comprenant:
une lentille composite (30); et
un photodétecteur (8) disposé derrière ladite lentille composite (30);
caractérisé en ce que:
ladite lentille composite (30) comprend une paire de régions de lentille sphérique (30a, 30b) divisées par un plan frontière (T) contenant l'axe optique (O) de la lumière tombant sur ladite lentille composite (30), lesdites deux régions de lentille (30a, 30b) possédant des distances focales arrière qui sont différentes l'une de l'autre, et les axes optiques (O₁, O₂) desdites deux régions de lentille (30a, 30b) sont séparés l'un de l'autre;

ledit photodétecteur (8) est ainsi placé que sa face de photodétection est placée en une position milieu sur l'axe optique (O) de ladite lumière incidente entre les foyers au niveau desquels la lumière émise venant desdites deux régions de lentille (30a, 30b) est mise au point lorsque la lumière incidente arrivant sur ladite lentille composite (30) est dans l'état de mise au point;

ledit photodétecteur (8) comprend un premier et un deuxième élément de photodétection (8A, 8B) qui sont destinés à recevoir la lumière qui est passée dans une première région de lentille (30a) de ladite paire de régions de lentille (30a, 30b) en des régions extérieure et intérieure par rapport audit plan frontière (T), et un troisième et un quatrième élément de photodétection (8C, 8D) qui sont destinés à recevoir la lumière qui est passée dans une deuxième région de lentille (30b) de ladite paire de régions de lentille (30a, 30b) en des régions extérieure et intérieure par rapport audit plan frontière (T); et

où, sur la base de la différence entre la somme de premier et quatrième signaux de photodétection venant desdits premier et quatrième éléments de photodétection (8A, 8D) et la somme des deuxième et troisième signaux de photodétection venant desdits deuxième et troisième éléments de photodétection (8B, 8C), le signal d'erreur de misé au point est produit.

2. Appareil selon la revendication 1, où ladite lentille composite (30) est faite de matière plastique.

3. Appareil selon la revendication 1 ou 2, où lesdits deuxième et troisième éléments de photodétection (8B, 8C) sont formés solidairement.

FIG. 1

FIG. 2

FIG. 3A

FIG. 3B

FIG. 3C

# F I G. 4

# F I G. 5

# F I G. 6

FIG. 7A

FIG. 7B

FIG. 7C

FIG. 8

FIG. 9

FIG. 12

FIG. 10

FIG. 13

FIG. 11

FIG. 14

FIG. 15

FIG. 16

FIG. 17A    FIG. 17B    FIG. 17C

FIG. 18

FIG. 19

FIG. 20

FIG. 21

FIG. 22

FIG. 23A   FIG. 23B   FIG. 23C

FIG. 24

FIG. 25   FIG. 26   FIG. 27   FIG. 28

FIG. 29   FIG. 30   FIG. 31

FIG. 32

FIG. 33